# EUROPEAN PATENT SPECIFICATION

(11) **EP 0 319 582 B1**
(45) Date of publication and mention of the grant of the patent: **24.02.1993**
(21) Application number: 87904961.7
(22) Date of filing: 30.07.1987
(51) Int. Cl.: G02B 26/10, B23K 26/08

(54) **LASER SCANNER**
LASERABTASTVORRICHTUNG
SCANNER A LASER

(30) Priority: 18.08.1986 JP 192541/86
(43) Date of publication of application: 14.06.1989
(73) Proprietor: KABUSHIKI KAISHA KOMATSU SEISAKUSHO, Minato-ku Tokyo 107 (JP)
(72) Inventor: OTA, Kazuo, Kanagawa-ken 254 (JP)
(74) Representative: Newstead, Michael John
(86) International application number: PCT/JP87/00568
(87) International publication number: WO 88/01396

(56) References cited:
- JP-A- 5 587 122
- JP-A- 5 997 786
- JP-A-56 137 158
- JP-A-59 197 818
- JP-A-61 210 318
- JP-A-61 235 091
- US-A- 4 584 455

## Description

The present invention relates to apparatus comprising a laser scanner.

As semiconductor technology is advanced, a variety of elements produced from semiconductors are being miniaturised more and more so that there is a requirement for improvement of current fine machining techniques.

Particularly, the laser machining technique has the following advantageous features compared with mechanical machining, electronic machining and chemical machining, each of which has been hitherto employed.
1. It can obtain a very high density of output power.
2. Since it is non-contact machining, distortion and deformation of a workpiece as seen after completion of machining compared with its state before machining can be suppressed to a minimised level.
3. It is possible to perform local machining.
4. Machining can be performed in an arbitrarily selected atmosphere. (Since there is no need of allowing the workpiece to be placed in vacuum, it can be performed at an inexpensive cost compared with conventional electron beam machining.)

In view of the above-mentioned advantageous features, laser machining has been widely employed in many utilisation fields, such as marking on a very fine part of a workpiece, trimming of thick film or thin film resistances, annealing of semiconductors and so forth.

An important consideration to be taken during laser machining is to control the direction in which a laser beam is sent. To this end, a laser scanner using a laser beam controlled by actuating a mirror is usually used.

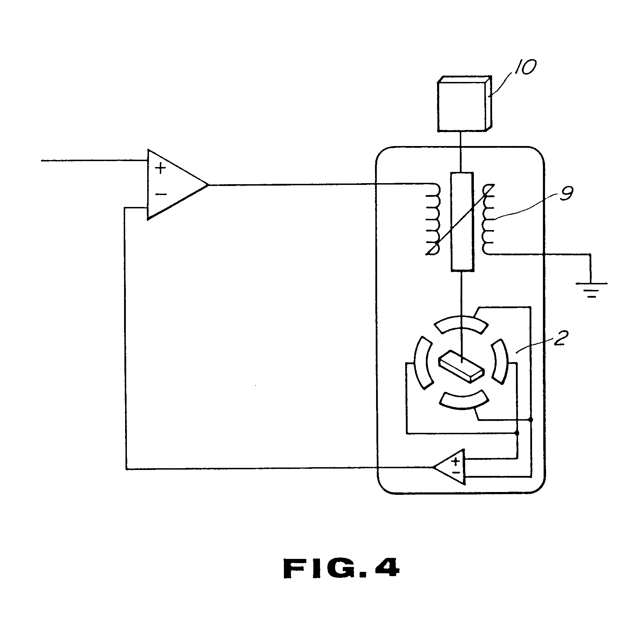

Such a scanner is provided with a position sensor 2 as shown, for example, in Figure 4 so that the direction in which a laser beam is sent is controlled by actuating a mirror 10 by means of a magnetic driver 9 on the basis of positional data detected by the position sensor 2.

With respect to such a conventional laser scanner, to assure that control of the position of the mirror 10 is exactly performed with respect to the axis of the scanner, there is a need of setting a strict operative condition. Especially, when a laser beam is reflected in practice in a factory shop, it is required that its temperature property is particularly stabilised. This is because of the fact that it is required that operations are performed under environmental conditions which cannot be assumed to be steady.

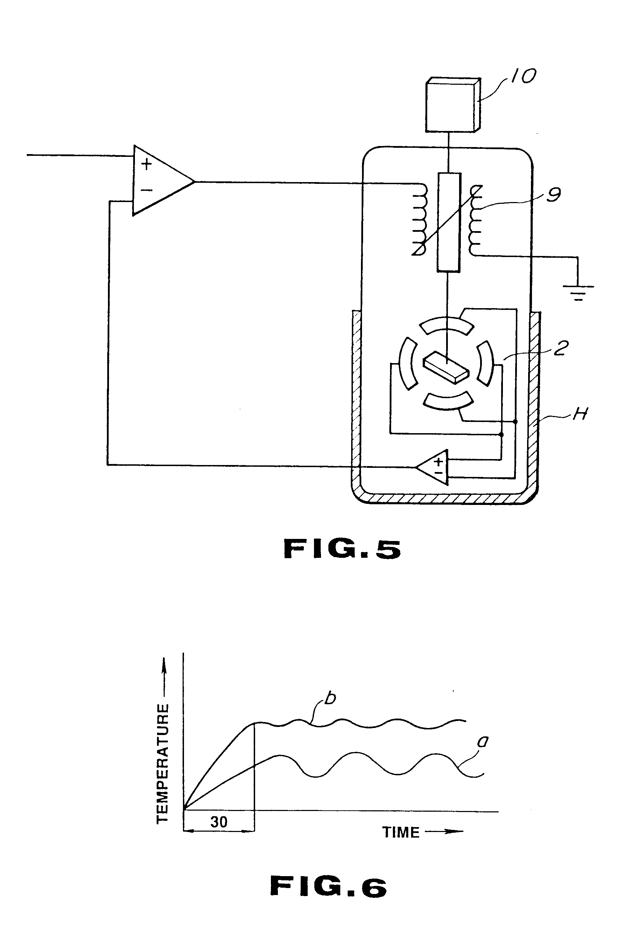

To assure that the temperature property is stabilised, a heater H may be arranged around the position sensor 2 in scanner 1 as shown in Figure 5, so that the position sensor section is heated up to and maintained at a temperature of about 40°C at all times by controlling the temperature of an electric power supply source to which the heater H is connected. Such a laser scanner is manufactured e.g. by General Scanning Corp. (U.S.A.). Figure 6 illustrates the relationships of temperature with respect to time between that (b) of a laser scanner of the type including a heater for the purpose of temperature maintaining and that (a) of a standard type laser scanner without any heater used therefor. As is apparent, the laser scanner of the first-mentioned type has an advantageous feature that an operating temperature can be stabilised more reliably than the standard type laser scanner but it has been found that it has the following problems.
1. It has an elongated period of running-in time (30 minutes).
2. The environment temperature required for operation of the laser scanner is restricted to the range of 10 to 28°C.
3. It is problematic from the viewpoint of environment and practical installation that it is employed industrially because of the problems as mentioned in the preceding paragraphs (1) and (2).
4. Since controlling is performed for a quantity of heat generated by the heater, it has a slow responsiveness to variation in temperature of the environment and moreover a drift cannot be suppressed completely.

The present invention has been made with the foregoing background in mind and its object resides in providing an apparatus comprising a laser scanner which assures that positional controlling of a mirror can be performed with high accuracy substantially without any occurence of temperature drift irrespective of variation in temperature of the scanner.

According to the present invention from one aspect, there is provided apparatus comprising a laser scanner having a mirror from which a laser beam is reflected, the scanner including, for controlling the direction in which the laser beam is reflected from the mirror, driving means for turning the mirror and position sensing means for sensing the position of the mirror, the driving means being actuated in response to a signal indicative of a positional command for the mirror and a position indicating signal from the sensing means, characterised in that the apparatus further includes:
scanner temperature sensing means for sensing the temperature of said position sensing means;
environment temperature sensing means for sensing the temperature of the environment; and
temperature controlling means adapted to perform a controlling operation so that the temperature of said position sensing means is kept substantially constant on the basis of an output from said scanner temperature sensing means and an output from said environment temperature sensing means.

According to the present invention from another aspect, there is provided apparatus comprising a laser scanner having a mirror from which a laser beam is reflected, the scanner including, for controlling the direction in which the laser beam is reflected from the mirror, driving means for turning the mirror and position sensing means for sensing the position of the mirror, the driving means being actuated in response to a signal indicative of a positional command for the mirror and a position indicating signal from the sensing means, characterised in that the apparatus further includes:
scanner temperature sensing means for sensing the temperature of said position sensing means;
correction deriving means including a correction table, the correction deriving means providing a position correction indication in dependence on variation of the temperature of said position sensing means; and
controlling means for controlling the actuation of said driving means by said signal indicative of a positional command and said position indicating signal in dependence on said position correction indication.

Where environment temperature sensing means is used, in one example variation in temperature of the scanner due to the environment temperature and the frequency of usage is compensated by heating/cooling means so that the temperature of the scanner is kept constant at all times, this causing the range of an operation temperature to be widened so that positional control of the mirror can be performed with high accuracy to properly respond to any rapid variation of temperature.

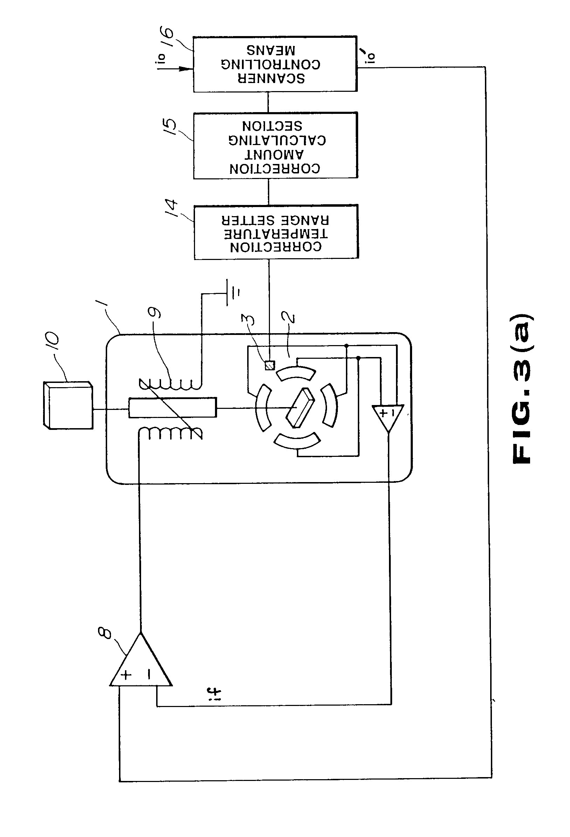

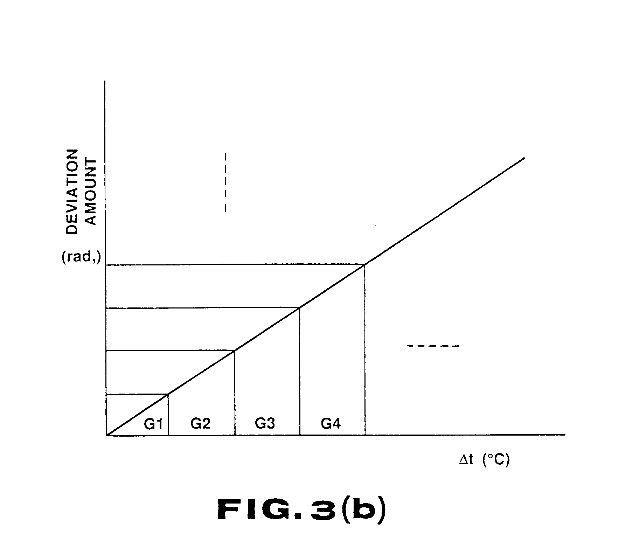

In an example of the second aspect of the present invention, correction values ΔXm and ΔYm in n stages represented by G1 to Gn have been previously set by a number of experiments, e.g. in dependence on a required degree of accuracy, as shown in Figure 3(b) and the following Table. In Figure 3(b), the ordinate values represent amounts of deviation (rad.) and the abscissa values represent values of the increase (Δt) in the temperature of the scanner from the initial value. A deviation (Δt) from the initial temperature is calculated on the basis of a value detected by the scanner temperature sensor so that a stage Gm corresponding to the calculated deviation is determined.

Then, correction positions are obtained in accordance with equations (1) and (2) selected from the following Table to correspond to the central values at the stage Gm which has been determined in that way.

$\text{X = Xo + ΔXm (1)}$

$\text{Y = Yo + ΔYm (2)}$

(where Xo and Yo represent coordinates detected by the position sensor). Then, the mirror is driven in dependence on the obtained correction positions. Since this method is practised in such a manner that correction is made on the basis of variation in temperature of the scanner, it is possible to reflect a laser beam with a high positional accuracy.

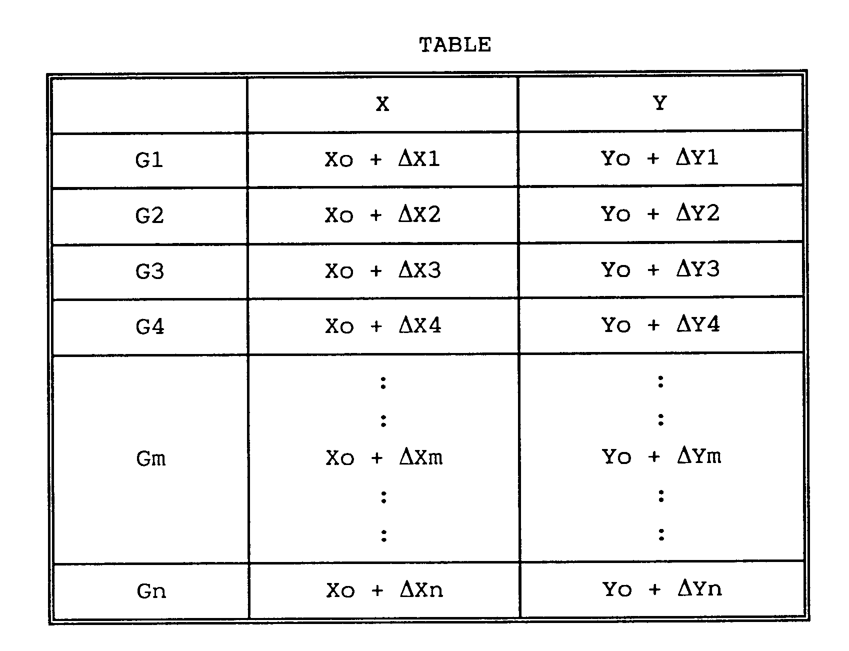

The present invention will now be described, by way of example, with reference to the accompanying drawings, in which:
Fig. 1 is a schematic view illustrating apparatus comprising a laser scanner in accordance with a first embodiment of the present invention;
Fig. 2 is a flowchart illustrating operations of a control unit of the apparatus of Fig. 1;
Fig. 3 (a) is a schematic view illustrating apparatus comprising a laser scanner in accordance with a second embodiment of the present invention;
Fig. 3 (b) is a diagram illustrating the relationship between temperature differences and amounts of deviation;
Figs. 4 and 5 are schematic views illustrating conventional apparatus comprising a laser scanner, respectively; and
Fig. 6 is a diagram illustrating relationships between time and temperature with respect to the apparatus shown in Figs. 4 and 5.

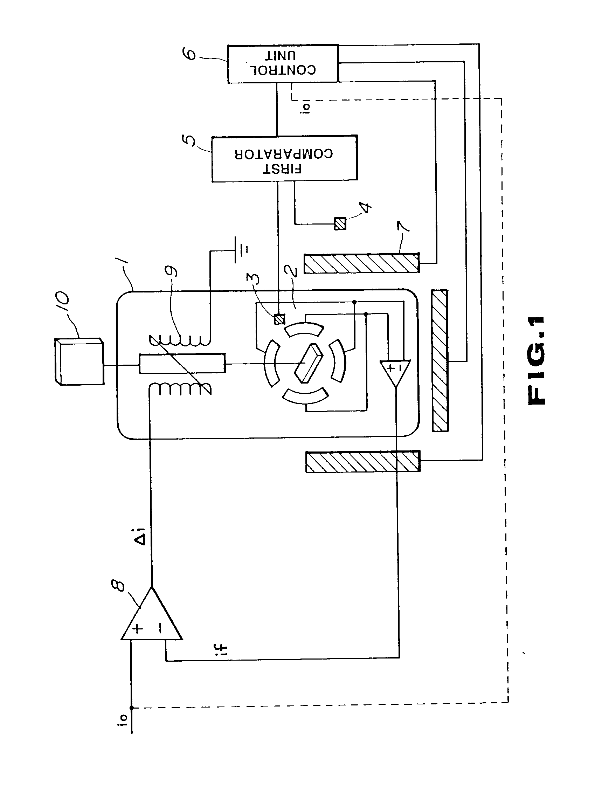

Fig. 1 is a schematic view illustrating apparatus comprising a laser scanner in accordance with a first embodiment of the present invention.

The apparatus according to Fig. 1 includes a scanner temperature sensor 3 located in the proximity of a scanner position sensor 2 in a scanner 1; an environment temperature sensor 4 adapted to detect the environment temperature; a first comparator 5 for comparing a value detected by the temperature sensor 3 with a value detected by the temperature sensor 4; a control unit 6 for use in controlling the temperature of the scanner position sensor 2 on the basis of an output from the first comparator 5 and an intensity of electric current indicative of a positional command to be inputted therein as a monitoring command signal; and a heating/cooling unit 7 comprising a Peltier element to heat or cool the scanner position sensor 2 in response to a command from the control unit 6.

Since other components constituting the apparatus except those as mentioned above are substantially identical to those for the conventional apparatus as shown in Fig. 4, same or similar components to those in Fig. 4 are identified by same reference numerals. In Fig. 1, reference numeral 8 designates a second comparator for comparing a feedback signal *if* from the scanner position sensor 2 with a positional command signal *io* to be inputted to the control unit 6 so as to output a driving electric current to a magnetic driver 9 and reference numeral 10 designates a mirror adapted to be turned by the magnetic driver 9.

Next, operation of the apparatus will be described in the following.

First, when a position command signal *io* indicative of the existent position is inputted to the second comparator 8, the latter compares the positional command signal *io* with the feedback signal *if* from the position sensor 2 so that a driving electric current Δ*i* is fed to the magnetic driver 9 on the basis of the result derived from the above comparison. This causes the mirror 10 to be turned by a predetermined quantity.

On the other hand, the positional command signal *io* is inputted to the control unit 6 as a command monitoring signal.

Then, a command signal is issued to the heating/cooling unit 7 from the control unit 6 with reference to the result derived from the comparison of an output from the scanner temperature sensor 3 with an output from the environment temperature sensor 4 by the first comparator 5 by virtue of the aforementioned monitoring command signal, whereby controlling is performed so as to allow the temperature of the scanner position sensor section to be kept constant at all times.

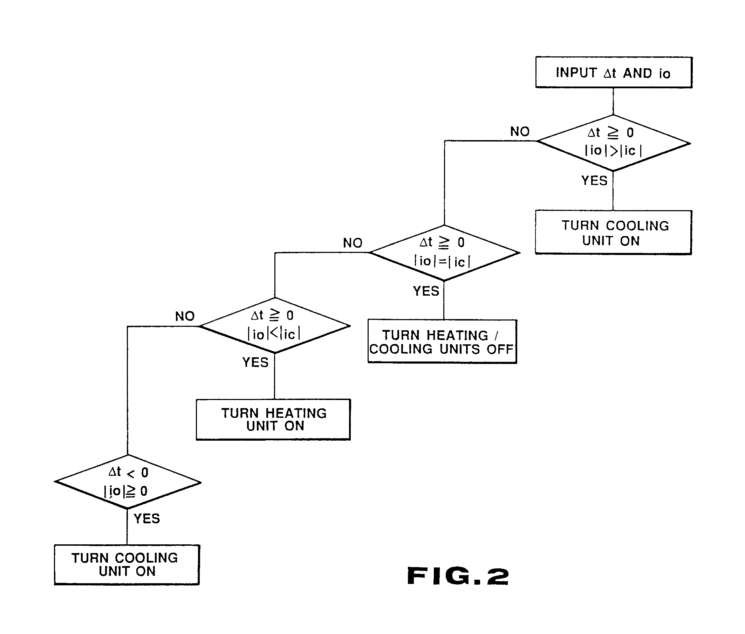

Fig. 2 is a flowchart which illustrates by way of example operations of the control unit 6. It is assumed that T₁ designates a temperature detected by the scanner temperature sensor 3, T₂ designates a temperature detected by the environment temperature sensor 4, Δt designates T₁ - T₂ and *ic* designates a command electric current whose intensity is determined so as to set a condition as identified by Δt = 0.

With the apparatus constructed in the above-described manner, the temperatures of the position sensor section and the environment temperature are continuously sensed so that controlling is performed in dependence on values of the temperatures so as to allow the temperature of the position sensor to be kept constant at all times. This makes it possible to properly control with high accuracy at all times the direction in which the laser beam is reflected, irrespective of how rapidly these temperatures vary.

Although in the above embodiment a Peltier element is employed for the heating/cooling, the present invention should not be, limited only to this.

Alternatively, the apparatus may be suitably changed or modified to apparatus of the type including an electrical heater and a cooling fan in combination, apparatus of the type using pure water or liquid having a high degree of electrical insulation as a heat conducting medium or like apparatus.

Next, there will be described with reference to Fig. 3(a) a second embodiment of the present invention.

The apparatus is to be so constructed that a differential temperature is previously divided into a plurality of stages G1 --- Gn as shown in Fig. 3(b). The differential temperature and an amount of deviation corresponding to the latter are stepwise calculated for respective stages G1 --- Gn in such a manner as shown in the foregoing Table and the temperature of the position sensor is continuously sensed so that data indicated by the position sensor are properly corrected by monitoring what stage among the stages G1 --- Gn is assumed by the differential temperature. Thus, the apparatus includes a scanner temperature sensor 3 located in the proximity of a scanner position sensor 2 in the scanner 1; a correction temperature range setter 14 adapted to calculate a difference Δt between the detected temperature and the preset reference temperature and determine to what stage among the preset stages G1 --- Gn a value derived from the above calculation corresponds; a correction amount calculating section 15 for calculating an amount of correction in dependence on an output from the correction temperature range setter 14; and scanner controlling means 16 for controlling correction of a signal *io* indicative of a positional command on the basis of an output from the correction amount calculating section 15.

Other components constituting the apparatus are substantially identical to those in the first embodiment. Thus, components having the same function as those in the first embodiment are identified by same reference numerals.

By using the aforementioned means, the signal *io* indicative of a positional command issued on the basis of printing data is continuously corrected in response to variation in temperature of the position sensor and a driving electric current is fed to the magnetic driver 9 on the basis of results derived from a comparison made between printing data *io'* after correction and a feedback signal *if* from the scanner position sensor whereby the mirror 10 is turned.

It is assumed that an amount of deviation at the central value of the temperature range at a certain stage Gm is added to the initial data by the scanner controlling means.

The apparatus as constructed in the above-described manner assures that an amount of drift relative to the initial data provided by the X/Y scanner as the latter has an increased temperature is calculated so that the drift is properly corrected so as to allow a value of the command signal to be kept constant within the preset temperature range. This makes it possible to very easily perform fine machining with high accuracy.

It should be added that if the differential temperature is finely divided into more stages, an accuracy can be improved much more while it is less affected by drift. Accordingly, it suffices that a number of stages are adequately selected in correspondence to a required accuracy. Thus, it is possible to easily perform proper positional setting in correspondence to a degree of requirement.

## Claims

1. Apparatus comprising a laser scanner (1) having a mirror (10) from which a laser beam is reflected, the scanner including, for controlling the direction in which the laser beam is reflected from the mirror, driving means (9) for turning the mirror and position sensing means (2) for sensing the position of the mirror, the driving means being actuated in response to a signal (*io*) indicative of a positional command for the mirror and a position indicating signal (*if*) from the sensing means, characterised in that the apparatus further includes:
scanner temperature sensing means (3) for sensing the temperature of said position sensing means;
environment temperature sensing means (4) for sensing the temperature of the environment; and
temperature controlling means (5,6,7) adapted to perform a controlling operation so that the temperature of said position sensing means is kept substantially constant on the basis of an output from said scanner temperature sensing means and an output from said environment temperature sensing means.

2. Apparatus comprising a laser scanner (1) having a mirror (10) from which a laser beam is reflected, the scanner including, for controlling the direction in which the laser beam is reflected from the mirror, driving means (9) for turning the mirror and position sensing means (2) for sensing the position of the mirror, the driving means being actuated in response to a signal (*io*) indicative of a positional command for the mirror and a position indicating signal (*if*) from the sensing means, characterised in that the apparatus further includes:
scanner temperature sensing means (3) for sensing the temperature of said position sensing means;
correction deriving means (14,15) including a correction table, the correction deriving means providing a position correction indication in dependence on variation of the temperature of said position sensing means; and
controlling means (16) for controlling the actuation of said driving means by said signal indicative of a positional command and said position indicating signal in dependence on said position correction indication.

## Patentansprüche

1. Vorrichtung mit einer Laserstrahl-Ablenkeineit (1) mit einem den Laserstrahl reflektierenden Spiegel (10), wobei die Laserstrahl-Ablenkeinheit zum Steuern der Richtung, in welche der Laserstrahl vom Spiegel reflektiert wird, eine Antriebseinrichtung (9) zum Drehen des Spiegels und einen Positionsfühler (2) zum Erfassen der Position des Spiegels umfaßt, wobei die Antriebseinrichtung als Reaktion auf ein Signal (io) welches einen Positionsbefehl für den Spiegel angibt, und ein Positionsanzeigesignal (if) von dem Fühler in Gang gesetzt wird, dadurch **gekennzeichnet**,
daß die Vorrichtung weiter umfaßt:
einen Temperaturfühler (3) für die Strahl-Ablenkeinheit zum Erfassen der Temperatur des genannten Positionfühlers,
einen Umgebungstemperaturfühler (4) zum Erfassen der Temperatur der Umgebung, und
eine Temperatursteuereinrichtung (5, 6, 7), welche zur Durchführung einer Steueroperation eingerichtet ist, so daß die Temperatur des genannten Positionsfühlers auf der Basis einer Ausgabe des genannten Temperaturfühlers für die Strahl-Ablenkeinheit und einer Ausgabe des genannten Umgebungstemperaturfühlers im wesentlichen konstant gehalten wird.

2. Vorrichtung mit einer Laserstrahl-Ablenkeinheit (1), mit einem den Laserstrahl reflektierenden Spiegel (10), wobei die Laserstrahl-Ablenkeinheit zum Steuern der Richtung, in welche der Laserstrahl vom Spiegel reflektiert wird, eine Antriebseinrichtung (9) zum Drehen des Spiegels und einen Postitionsfühler (2) zum Erfassen der Position des Spiegels umfaßt, wobei die Antriebseinrichtung als Reaktion auf ein Signal (io), welches einen Positionsbefehl für den Spiegel angibt, und ein Positionsanzeigesignal (if) von dem Fühler in Gang gesetzt wird, dadurch **gekennzeichnet**,
daß die Vorrichtung weiter umfaßt:
einen Temperaturfühler (3) für die Strahl-Ablenkeinheit zum Erfassen der Temperatur des genannten Positionsfühlers,
eine Einrichtung (14, 15) zum Herleiten einer Korrektur mit einer Korrekturtabelle, wobei die Einrichtung zum Herleiten der Korrektur eine Positionskorrekturangabe in Abhängigkeit von der Temperaturänderung des genannten Positionsfühlers liefert und
eine Steuereinrichtung (16) zum Steuern der Betätigung der genannten Abtriebseinrichtung durch das genannte, den Positionsbefehl angebende Signal und das genannte Positionsanzeigesignal in Abhängigkeit von der genannten Positionskorrekturangabe.

## Revendications

1. Installation comprenant un scanner (1) à laser ayant un miroir (10) par lequel un faisceau laser est réfléchi, le scanner comprenant, pour se rendre maître de la direction dans laquelle le faisceau laser est réfléchi par le miroir, des moyens d'entraînement (9) destinés à faire tourner le miroir et des moyens de détection de position (2) destinés à détecter la position du miroir, les moyens d'entraînement étant actionnés en réponse à un signal (io) indicateur d'une commande de position du miroir et d'un signal d'indication de position (if) provenant des moyens de détection, caractérisée en ce que l'installation comprend en outre :
des moyens de détection de la température (3) du scanner destinés à détecter la température des moyens de détection de position ;
des moyens de détection de la température (4) ambiante, destinés à détecter la température ambiante ; et
des moyens de réglage de la température (5, 6, 7) destinés à effectuer une opération de réglage de manière à maintenir la température des moyens de détection de position sensiblement constante sur la base d'un signal de sortie des moyens de détection de la température du scanner et d'un signal de sortie des moyens de détection de la température ambiante.

2. Installation comprenant un scanner (1) à laser ayant un miroir (10) par lequel un faisceau laser est réfléchi, le scanner comprenant, pour se rendre maître de la direction dans laquelle le faisceau laser est réfléchi par le miroir, des moyens d'entraînement (9) destinés à faire tourner le miroir et des moyens de détection de position (2) destinés à détecter la position du miroir, des moyens d'entraînement étant actionnés en réponse à un signal (io) indicateur d'une commande de position du miroir et d'un signal d'indication de position (if) provenant des moyens de détection, caractérisée en ce que l'installation comprend en outre :
des moyens de détection de la température (3) du scanner destinés à détecter la température des moyens de détection de position ;
des moyens de correction de dérive (14, 15) comprenant une table de correction, les moyens de correction de dérive fournissant une indication de correction de position en fonction de la variation de la température des moyens de détection de position ; et
des moyens de commande (16) destinés à commander l'actionnement des moyens d'entraînement par le signal indicateur d'une commande de position et par le signal indicateur de position en fonction de l'indication de correction de position.
